# EUROPÄISCHE PATENTSCHRIFT

(11) **EP 1 880 128 B1**
(45) Veröffentlichungstag und Bekanntmachung des Hinweises auf die Patenterteilung: **26.09.2018**
(21) Anmeldenummer: 06753422.2
(22) Anmeldetag: 26.04.2006
(51) Int. Cl.: F16H 61/16, F16H 61/02

(54) **VERFAHREN ZUR STEUERUNG EINES GETRIEBES EINES FAHRZEUGS**
METHOD FOR CONTROLLING THE TRANSMISSION OF A VEHICLE
PROCEDE DE COMMANDE D'UNE BOITE DE VITESSES DANS UN VEHICULE A MOTEUR

(30) Priorität: 10.05.2005 DE 102005022314
(43) Veröffentlichungstag der Anmeldung: 23.01.2008
(73) Patentinhaber: ZF Friedrichshafen AG, 88046 Friedrichshafen (DE)
(72) Erfinder: GIERLING, Armin, 88085 Langenargen (DE); JAUCH, Friedemann, 88069 Tettnang (DE); SCHULER, Franz-Josef, 88079 Kressbronn (DE); KIEFER, Michael, 88069 Tettnang (DE)
(86) Internationale Anmeldenummer: PCT/EP2006/003863
(87) Internationale Veröffentlichungsnummer: WO 2006/119868

(56) Entgegenhaltungen:
- EP-A- 0 638 742
- EP-A- 1 342 939
- DE-A1- 19 963 564
- US-A- 4 996 893

## Beschreibung

Die Erfindung betrifft ein Verfahren zur Steuerung eines Getriebes eines Fahrzeugs, insbesondere eines Automatgetriebes oder eines automatisierten Getriebes, gemäß der im Oberbegriff des Patentanspruches 1 näher definierten Art, wie aus der DE 199 63 564 A1 bekannt.

Aus der Praxis bekannte Getriebe, wie Automatgetriebe, automatisierte Getriebe oder dergleichen, sind üblicherweise mit elektronischen Getriebesteuereinrichtungen ausgeführt, mittels welchen in den Getrieben in Abhängigkeit verschiedener vordefinierter Schaltkriterien im Betrieb eines Fahrzeugs Getriebeübersetzungen eingestellt werden, die wiederum in Abhängigkeit verschiedener ebenfalls in den Getriebesteuereinrichtungen hinterlegten Fahrstrategien, eines Fahrertyps und/oder in Abhängigkeit eines aktuellen Betriebszustandes des Fahrzeugs ausgewählt werden.

Die Schaltkriterien umfassen u. a. so genannte Schaltprogramme zum Darstellen verschiedener Betriebszustandsverläufe, die zumindest in Abhängigkeit aktueller Betriebszustandsparameter des Fahrzeugs und/oder wenigstens in Abhängigkeit eines Fahrverhaltens eines Fahrers aktiviert werden. Um ein Getriebe einer aktuellen Fahrsituation entsprechend ansteuern zu können, sind in den Getriebesteuereinrichtungen jeweils eine Vielzahl unterschiedlicher Schaltprogramme, wie ein Normalschaltprogramm, ein Sportschaltprogramm, ein ökonomisches Schaltprogramm, ein Bergschaltprogramm, ein Warmlaufprogramm und dergleichen, vorgesehen.

Zusätzlich sind in den elektronischen Getriebesteuereinrichtungen so genannte Sonderfunktionen hinterlegt, mittels welchen von den vorbeschriebenen Schaltprogrammen angeforderte Übersetzungswechsel eines Getriebes verhindert werden. Dabei können sich die Sonderfunktionen sowohl auf einfache als auch auf mehrfache Hoch- und Rückschaltungen beziehen.

Nachteilig dabei ist jedoch, dass die aus der Praxis bekannten Vorgehensweisen zur Ansteuerung eines Getriebes mit Sonderfunktionen für eine Schaltverhinderung nur in stark eingeschränktem Umfang dazu geeignet sind, ein Getriebe in einem einen hohen Fahrkomfort gewährleistenden Umfang, d. h. an den jeweilig aktuell vorliegenden Betriebszustand des Fahrzeugs angepasst, ansteuern zu können.

Der vorliegenden Erfindung liegt daher die Aufgabe zugrunde, ein Verfahren zur Steuerung eines Getriebes eines Fahrzeugs, insbesondere eines Automatgetriebes oder eines automatisierten Getriebes, zur Verfügung zu stellen, das ein für die Gewährleistung eines hohen Fahrkomforts erforderliches dynamisches und variierbares Steuersystem darstellt.

Erfindungsgemäß wird diese Aufgabe mit einem Verfahren gemäß den Merkmalen des Patentanspruches 1 gelöst.

Bei dem erfindungsgemäßen Verfahren zur Steuerung eines Getriebes eines Fahrzeugs, insbesondere eines Automatgetriebes oder eines automatisierten Getriebes, werden Getriebeübersetzungen anhand vordefinierter Schaltprogramme und damit korrespondierender Schaltkennlinien betriebszustandsabhängig eingestellt. In Abhängigkeit eines aktuellen Betriebszustandes des Fahrzeugs wird jeweils wenigstens eine Sonderfunktion aktiviert, die einen schaltprogrammseitig angeforderten Wechsel von einer Ist-Übersetzung des Getriebes zu einer Ziel-Übersetzung innerhalb eines vordefinierten Betriebsbereiches des Fahrzeugs verhindert.

Erfindungsgemäß wird der Betriebsbereich, innerhalb welchem ein Übersetzungswechsel des Getriebes verhindert wird, nach der Erfindung gemäß Patentanspruch 1 in Abhängigkeit applizierter betriebszustandsabhängiger Kennwerte variiert, womit im Gegensatz zu den aus der Praxis bekannten statischen Getriebesteuerungen ein dynamisches und variables Steuersystem zur Verfügung steht.

Damit besteht auf einfache Art und Weise die Möglichkeit, einen vorzugsweise als Drehzahlbereich der Motordrehzahl einer Antriebsmaschine des Fahrzeugs ausgeführten Betriebsbereich des Fahrzeugs, der von einer Drehzahluntergrenze und einer Drehzahlobergrenze begrenzt ist, zu vergrößern, zu verkleinern und/oder zu verschieben, so dass eine über eine Sonderfunktion aktivierte Schaltverhinderung auf einfache Art und Weise bedarfsgerecht an unterschiedliche Betriebszustände eines Fahrzeugs durch entsprechende Abänderungen angepasst werden kann.

Bei einer nicht beanspruchten Variante des Verfahrens zur Steuerung eines Getriebes eines Fahrzeugs wird ein dynamisches und variables Steuersystem dadurch geschaffen, dass die Schaltkennlinien der Schaltprogramme in Abhängigkeit applizierter betriebszustandsabhängiger Kennwerte derart variiert werden, dass schaltkennlinienseitig definierte Betriebspunkte des Fahrzeugs, zu dem Übersetzungswechsel angefordert werden, an den aktuellen Betriebszustand des Fahrzeugs angepasst sind.

Somit wird bei der zweiten Variante des Verfahrens zum Steuern eines Getriebes eines Fahrzeugs im Gegensatz zur ersten Variante des Verfahrens die jeweils der Steuerung zugrunde liegende Schaltkennlinie in Abhängigkeit applizierter betriebszustandsabhängiger Kennwerte derart variiert, dass mit Übersetzungswechseln im Getriebe ein hoher Fahrkomfort sowie eine hohe Fahrsicherheit erreicht wird.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: mehrere tabellarische Datenfelder verschiedener und gleichzeitig aktivierbarer Sonderfunktionen, mittels welchen eine betriebszustandsabhängige Schaltverhinderung durchführbar ist;
- Fig. 2: eine mit Fig. 1 korrespondierende Darstellung einer Hochschaltkennlinie eines Sportfahrschaltprogramms mit dynamischer Hochschaltverhinderung;
- Fig. 3: eine mit Fig. 2 korrespondierende Darstellung einer Rückschaltkennlinie mit dynamischer Rückschaltverhinderung;
- Fig. 4: zwei tabellarische Datenfelder, mittels welchen eine lastabhängige dynamische Hochschaltverhinderung durchführbar ist;
- Fig. 5: eine mit Fig. 4 korrespondierende Darstellung einer Hochschaltkennlinie eines Sportfahrschaltprogramms mit lastabhängiger dynamischer Hochschaltverhinderung;
- Fig. 6: ein tabellarisches Datenfeld, mittels welchem eine Standardhochschaltkennlinie zur Realisierung einer dynamischen Schaltpunktverschiebung betriebszustandsabhängig variierbar ist;
- Fig. 7: eine mit Fig. 6 korrespondierende grafische Darstellung der Anpassung einer betriebszustandsabhängigen, dynamischen Hochschaltkennlinie eines Sportfahrschaltprogramms;
- Fig. 8: ein weiteres tabellarisches Datenfeld, mittels welchem eine betriebszustandsabhängige, dynamische Schaltpunktverschiebung bei einer Rückschaltung durchführbar ist;
- Fig. 9: eine Fig. 7 entsprechende und mit Fig. 8 korrespondierende Darstellung einer Rückschaltkennlinie eines ökonomischen Schaltprogramms mit betriebszustandsabhängiger, dynamischer Schaltpunktverschiebung; und
- Fig. 10: eine grafische Darstellung einer Schaltpunktverschiebung, die durch zwei gleichzeitig aktivierte Sonderfunktionen für eine Schaltverhinderung bewirkt wird.

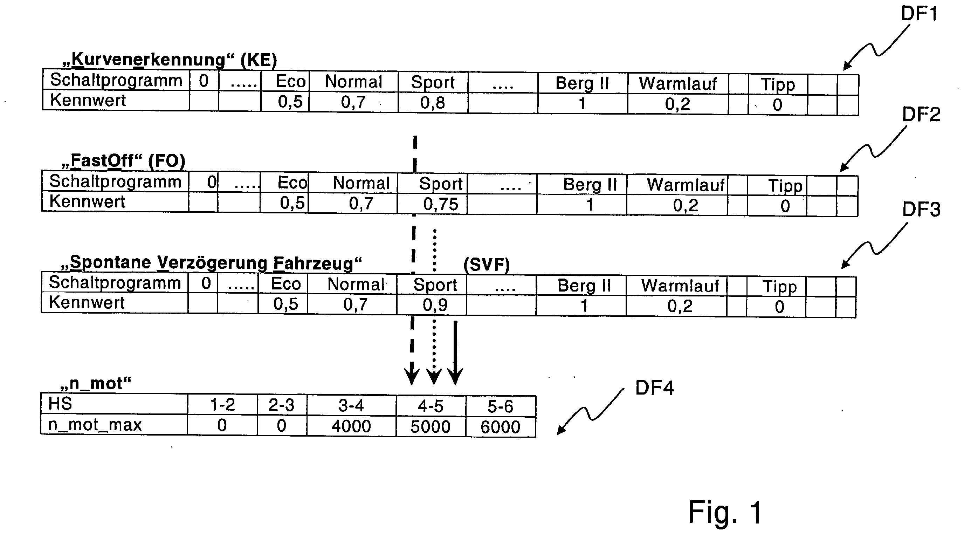

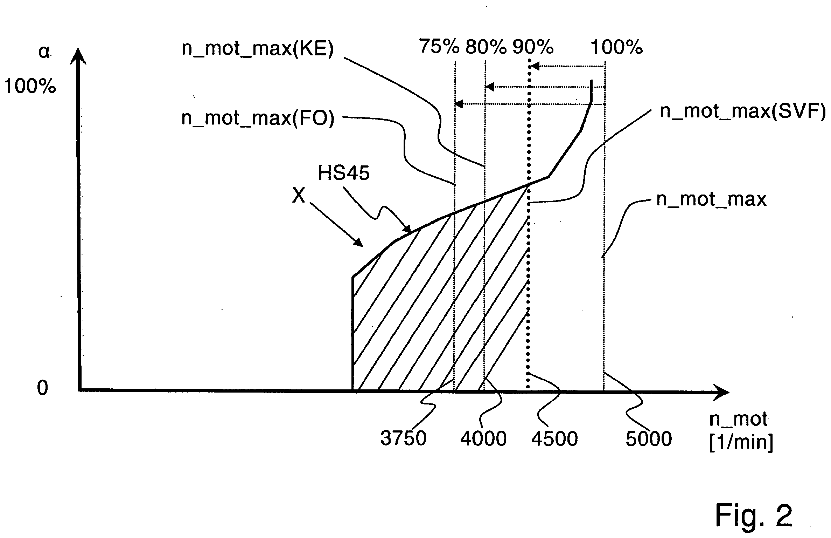

In Fig. 1 sind mehrere tabellarische Datenfelder DF1 bis DF4 dargestellt, welche zur Durchführung einer ersten Variante des erfindungsgemäßen Verfahrens zur Steuerung eines Getriebes mit sechs Übersetzungen "1" bis "6" für Vorwärtsfahrt eines Fahrzeugs herangezogen werden und mit der in Fig. 2 gezeigten Darstellung korrespondieren.

Die Datenfelder DF1 bis DF3 repräsentieren jeweils Sonderfunktionen, die bei Vorliegen bestimmter Betriebszustände in bestimmten Betriebsbereichen des Fahrzeugs, d. h. bei dem Fig. 1 bis Fig. 5 zugrundeliegenden ersten Ausführungsbeispiel in einem definierten Drehzahlbereich der Motordrehzahl n_mot einer Antriebsmaschine des Fahrzeugs, eine angeforderte Hochschaltung verhindern. Dabei sind in den Datenfeldern DF 1 bis DF3 der Sonderfunktionen jedem der Schaltprogramme "0", "Eco", "Normal", "Sport", "Berg II", "Warmlauf", "Tipp" und auch weiteren Schaltprogrammen verschiedene betriebszustandsabhängige, applizierte Kennwerte zugeordnet.

Die in den Datenfeldern DF1 bis DF3 aufgeführten Schaltprogramme werden vorliegend in Abhängigkeit einer über einen Wählhebel oder über Programmtaster, wie beispielsweise für ein Sportfahrprogramm oder ein Winterfahrprogramm, vorliegenden Fahrerwunschvorgabe und einer aktuellen Fahrsituation ausgewählt, und liefern jeweils einen aktuellen Übersetzungsvorschlag. Das jeweilige in der Getriebesteuerung hinterlegte und zu aktivierende Schaltprogramm wird beispielsweise durch eine nicht näher dargestellte Tabelle ermittelt, das dann in Abhängigkeit vorgegebener Prioritäten in an sich bekannter Weise eine Funktion aufruft, die den aktuellen Vorschlag für die einzustellende Getriebeübersetzung ausgibt. Zusätzlich sind beispielhaft die Sonderfunktionen "Kurvenerkennung KE", "Schnelle Fahrpedalrücknahme FO" und "Spontane Verzögerung Fahrzeug SVF" vorgesehen, die entweder eine Übersetzungsstufe oder mehrere Übersetzungsstufen umfassende angeforderte Hoch- und/oder Rückschaltungen des Getriebes bei Vorliegen vordefinierte Betriebszustände des Fahrzeugs über vordefinierte Betriebsbereiche verhindern. Selbstverständlich können auch weitere Sonderfunktionen vorgesehen sein, die eine entsprechende Schaltpunktbeeinflussung ermöglichen.

So wird über die beispielhafte Sonderfunktion "Kurvenerkennung KE" in einem Betriebszustand, zu dem ein Fahrer mit seinem Fahrzeug in der vierten Vorwärtsfahrstufe in eine Kurve einfährt und dabei eine Fahrpedalbetätigung reduziert, eine angeforderte Hochschaltung verhindert. Die Sonderfunktion "Spontane Verzögerung Fahrzeug SVF" unterstützt beim Bremsen durch früheres Rückschalten und fordert zusätzlich in einem solchen Betriebszustand zusätzlich eine Schaltverhinderung an, so dass die zusätzliche Bremswirkung durch das Motorbremsmoment nicht durch eine Hochschaltung im Getriebe verloren geht.

Im Datenfeld DF4 sind verschiedenen Hochschaltungen HS, wie aus der ersten Vorwärtsfahrstufe "1" in Richtung der zweiten Vorwärtsfahrstufe "2", jeweils eine Drehzahlobergrenze n_mot_max der Motordrehzahl n_mot zur Definition eines vordefinierten Betriebsbereiches zugeordnet, innerhalb dem ein Übersetzungswechsel im Getriebe durch die aktivierten Sonderfunktionen "Kurvenerkennung KE", "Schnelle Fahrpedalrücknahme FO", "spontane Verzögerung Fahrzeug SVF" verhindert werden soll. Dabei ist beispielsweise einer Hochschaltung ausgehend von einer vierten Vorwärtsfahrstufe "4" in Richtung einer fünften Vorwärtsfahrstufe "5" die Drehzahlobergrenze n_mot_max in Höhe von 5 000 1/min zugeordnet. Eine Drehzahluntergrenze n_mot_min der im Datenfeld DF4 vordefinierten Betriebsbereiche bzw. Drehzahlbereiche der Motordrehzahl n_mot ist Null und kann in Abhängigkeit des jeweils vorliegenden Anwendungsfalles auch hiervon abweichend mit einem anderen geeigneten Drehzahlwert belegt werden.

Weitere sinnvolle Sonderfunktionen, bei denen eine Hochschaltverhinderung angefordert werden kann und die im Datenfeld DF4 entsprechend eingetragen sein können, sind beispielsweise: "Schaltprogrammwechsel", "Bergaberkennung", "Fahrdynamikregelung ESP", "manuelle Gangauswahl ( = Tipp-Betrieb)", "Fahrgeschwindigkeitsregelung FGR ( = Tempomat-Betrieb)", "spontane Rückschaltung aufgrund schneller Fahrpedalbetätigung" und "Doppel- oder Mehrfachrückschaltung".

Nachfolgend wird das erfindungsgemäße Verfahren anhand der in Fig. 2 gezeigten Darstellung einer Hochschaltkennlinie HS45 für eine Hochschaltung HS ausgehend von der vierten Vorwärtsfahrstufe "4" in Richtung der fünften Vorwärtsfahrstufe "5", deren Verlauf über der Motordrehzahl n_mot und in Abhängigkeit einer Fahrpedalstellung α wiedergegeben ist, näher erläutert.

Generell wird von der Getriebesteuerung eine Hochschaltung HS von der vierten in die fünfte Vorwärtsfahrstufe in an sich bekannter Art und Weise bei einem Betriebszustandsverlauf des Fahrzeugs angefordert, während dem die Hochschaltkennlinie HS45 in der durch den Pfeil X gekennzeichneten Richtung gekreuzt wird, wenn keine der Sonderfunktionen für eine Schaltverhinderung "Kurvenerkennung KE", "Schnelle Fahrpedalrücknahme FO", "Spontane Verzögerung Fahrzeug SVF" aktiviert ist.

Bei aus der Praxis bekannten Steuersystemen wird eine Hochschaltung durch eine aktivierte Sonderfunktion für eine Schaltverhinderung über einen gesamten Betriebszustandsverlauf eines Fahrzeugs verhindert, solange diese aktiv ist. Bei der den Darstellungen gemäß Fig. 1 und Fig. 2 zugrunde liegenden Variante des erfindungsgemäßen Verfahrens wird der Betriebsbereich des Fahrzeugs, d. h. vorliegend der Drehzahlbereich der Motordrehzahl n_mot, innerhalb dem eine Hochschaltung HS verhindert wird, in Abhängigkeit des jeweils aktivierten Schaltprogramms und in Abhängigkeit der jeweils aktivierten Sonderfunktion dadurch betriebszustandsabhängig variiert, dass ein im Datenfeld DF4 hinterlegter und jeweils einer Hochschaltung HS zugeordneter Drehzahlwert der Drehzahlobergrenze n_mot_max des Betriebsbereichs des Fahrzeugs mit einem in den Datenfeldern DF1 bzw. DF3 der Sonderfunktionen "Kurvenerkennung KE", "Schnelle Fahrpedalrücknahme FO", "Spontane Verzögerung Fahrzeug SVF" für das jeweilig aktive Schaltprogramm hinterlegten Kennwert multipliziert wird.

Die Veränderung der Drehzahlobergrenze n_mot_max des Betriebsbereichs des Fahrzeugs ist durch die in Fig. 2 dargestellten vier vertikalen Linien n_mot_max, n_mot_max (KE), n_mot_max (FO), n_mot_max (SVF), die zusätzlich mit den Prozentzahlen 75, 80 und 100 näher gekennzeichnet sind, grafisch wiedergegeben. Dabei entspricht die mit 100 % bezeichnete vertikale Linie n_mot_max der im Datenfeld DF4 hinterlegten Drehzahlobergrenze für die Hochschaltung von der vierten in die fünfte Vorwärtsfahrstufe in Höhe von 5 000 1/min.

Die mit 90 % bezeichnete vertikale Linie n_mot_max (SVF) ergibt sich aus der Multiplikation des im Datenfeld DF3 dem Sportfahrprogramm "Sport" zugeordneten Kennwertes, der den Wert 0,9 aufweist, mit der im Datenfeld DF4 für das Sportfahrprogramm "Sport" hinterlegten Drehzahlobergrenze n_mot_max. Die mit 80 % und 75 % bezeichneten vertikalen Linien n_mot_max (KE) und n_mot_max (FO) ergeben sich jeweils aus der Multiplikation der im Datenfeld DF4 für das Sportfahrprogramm "Sport" hinterlegten Drehzahlobergrenze n_mot_max mit in den Datenfeldern DF1 und DF2 für das Sportfahrprogramm "Sport" hinterlegten Kennwerten mit den Werten 0,8 und 0,75.

Ist jeweils nur eine der Sonderfunktionen "Kurvenerkennung KE", "Schnelle Fahrpedalrücknahme FO f" oder "Spontane Verzögerung Fahrzeug SVF" aktiv, wird eine beim Überschreiten der Hochschaltkennlinie HS45 angeforderte Hochschaltung HS beim Überschreiten der durch die jeweils aktivierte Sonderfunktion festgelegten Drehzahlobergrenze durchgeführt. Das bedeutet, dass eine Hochschaltung HS bei aktivierter Sonderfunktion "Schnelle Fahrpedalrücknahme FO" bei einem kleineren Drehzahlwert der Motordrehzahl n_mot durchgeführt wird, als dies bei aktivierter Sonderfunktion "Spontane Verzögerung Fahrzeug SVF" der Fall ist.

Darüber hinaus ist es bei einem Betriebszustand des Fahrzeuges vorgesehen, zu dem mehrere Sonderfunktionen gleichzeitig aktiviert sind, dass eine so genannte Maximalauswahl zwischen den über die Sonderfunktion jeweils einem Schaltprogramm gleichzeitig zugeordneten Kennwerten durchgeführt wird. So wird beispielsweise die in dem Datenfeld DF4 hinterlegte Drehzahlobergrenze bei aktiviertem Sportfahrprogramm "Sport" mit dem Wert von 0,9 multipliziert, wenn alle drei in Fig. 1 aufgeführten Sonderfunktionen gleichzeitig aktiv sind, wobei der Drehzahlbereich, innerhalb dem dann eine Hochschaltung verhindert wird, in Fig. 2 durch die schraffierte Fläche gekennzeichnet ist.

An dieser Stelle wird darauf hingewiesen, dass es im Ermessen des Fachmannes liegt, in Abhängigkeit des jeweils vorliegenden Anwendungsfalles weitere Sonderfunktionen in die erfindungsgemäße Vorgehensweise zu implementieren, um das mit dem erfindungsgemäßen Verfahren betriebene Getriebe in dem jeweils gewünschten Umfang an den aktuellen Betriebszustand angepasst betreiben zu können.

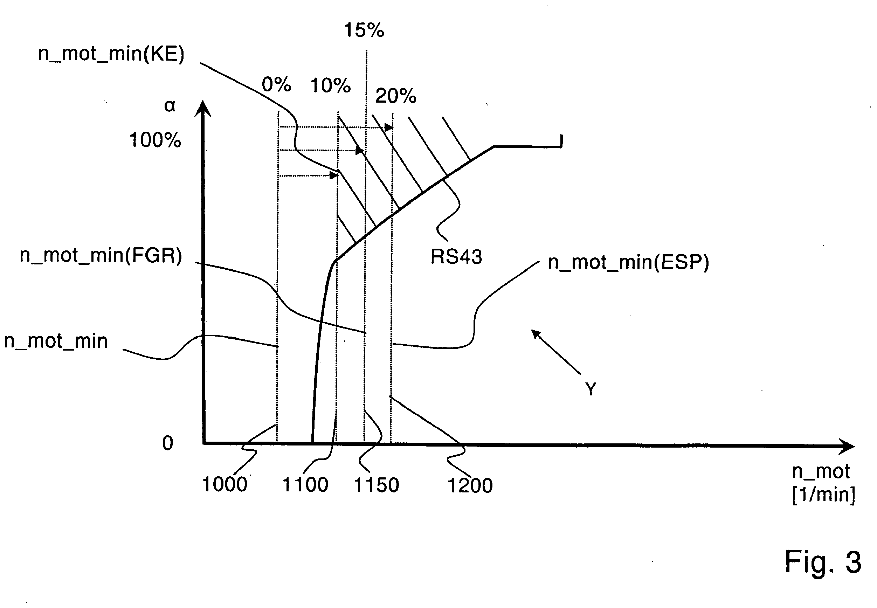

In Fig. 3 ist eine Fig. 2 entsprechende Darstellung einer Rückschaltkennlinie RS43 ausgehend von der vierten Vorwärtsfahrstufe "4" in Richtung einer dritten Vorwärtsfahrstufe "3" über der Motordrehzahl n_mot in Abhängigkeit einer Fahrpedalstellung α dargestellt, wobei der Betriebsbereich des Fahrzeugs, innerhalb welchem ein Übersetzungswechsel im Getriebe verhindert wird, vorliegend durch eine Drehzahluntergrenze n_mot_min mit einem Wert von 1 000 1/min begrenzt ist. Die Drehzahlobergrenze des Betriebsbereich ist vorliegend vorzugsweise nicht näher spezifiziert und von beliebiger Höhe, so dass der Betriebsbereich bzw. der Drehzahlbereich die Motordrehzahl n_mot, innerhalb dem die Rückschaltung verhindert wird, nicht durch eine obere Drehzahlgrenze begrenzt ist.

Für die in Fig. 3 dargestellte Rückschaltkennlinie RS43 und die damit verbundene Rückschaltung im Getriebe sind in derselben Art und Weise wie zu Fig. 1 und Fig. 2 näher beschrieben, in der Zeichnung nicht näher dargestellte Datenfelder der beispielhaften Sonderfunktionen "Kurvenerkennung KE", "Fahrgeschwindigkeitsregelung FGR" und "Fahrstabilitätsregelung ESP" für eine Schaltverhinderung sowie wenigstens ein weiteres Datenfeld, mittels dem den verschiedenen Rückschaltungen im Getriebe verschiedene Drehzahluntergrenzen n_mot_min zugewiesen werden, vorgesehen. Über die Datenfelder der Sonderfunktionen für eine Schaltverhinderung wird den einzelnen Fahrprogrammen jeweils in der in Fig. 1 dargestellten Art und Weise ein betriebszustandsabhängiger und applikativ ermittelter Kennwert zugeordnet, mittels welchen die Drehzahluntergrenze n_mot_min in Höhe von 1 000 1/min in der in Fig. 3 dargestellten Art und Weise für die verschiedenen Sonderfunktionen für eine Rückschaltverhinderung betriebszustandsabhängig variiert wird, so dass ein dynamisches System zur Verfügung steht. Weitere sinnvolle Sonderfunktionen, bei denen eine Rückschaltverhinderung angefordert werden kann und die im entsprechenden Datenfeld eingetragen sein können, sind beispielsweise "Schaltprogrammwechsel" und "manuelle Gangauswahl (Tipp-Betrieb)".

Vorliegend ist der Rückschaltung von der dritten in die vierte Vorwärtsfahrstufe eine Drehzahluntergrenze n_mot_min ein Wert von 1 000 1/min zugeordnet, die in Fig. 3 durch die vertikale Linie n_mot_min graphisch wiedergegeben ist.

Die weiteren drei vertikalen Linien n_mot_min (KE), n_mot_min (FGR), n_mot_min (ESP), welche mit 10 %, 15 % und 20 % näher bezeichnet sind, resultieren aus einer zu Fig. 1 und Fig. 2 beschriebenen Vorgehensweise entsprechenden Vorgehensweise, bei der die Drehzahluntergrenze n_mot_min mit den Schaltprogrammen des Getriebes über die beispielhaften Sonderfunktionen "Kurvenerkennung KE", "Fahrgeschwindigkeitsregelung FGR" und "Fahrstabilitätsregelung ESP" jeweils zugewiesenen Kennwerten multipliziert und dadurch variiert wird. Das bedeutet, dass der Betriebsbereich bzw. der Drehzahlbereich, innerhalb dem die durch die jeweils aktivierte Sonderfunktion angeforderte Rückschaltung verhindert wird, durch die unterschiedliche Drehzahluntergrenzen n_mot_min, n_mot_min (KE), n_mot_min (FGR) und n_mot_min (ESP) verändert wird und die Rückschaltung bereits bei Unterschreiten der jeweils relevanten Drehzahluntergrenze durchgeführt wird.

Sind gleichzeitig mehrere der Sonderfunktionen aktiviert, wird eine mathematische Minimalwertauswahl bezüglich der für die Schaltprogramme in den Sonderfunktionen hinterlegten Kennwerte durchgeführt. Unter Bezugnahme auf den in Fig. 3 dargestellten Fall, bei dem alle drei vorgenannten beispielhaften Sonderfunktionen gleichzeitig aktiv sind und bei dem der dem vorliegend aktivierten Schaltprogramm zugewiesene kleinste Kennwert 10 % ist, wird die Drehzahluntergrenze n_mot_min mit dem Wert von 1 100 1/min ausgewählt.

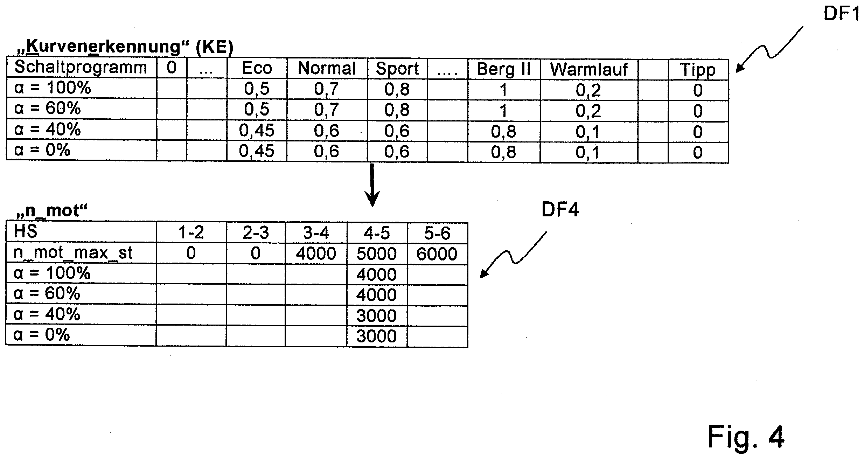

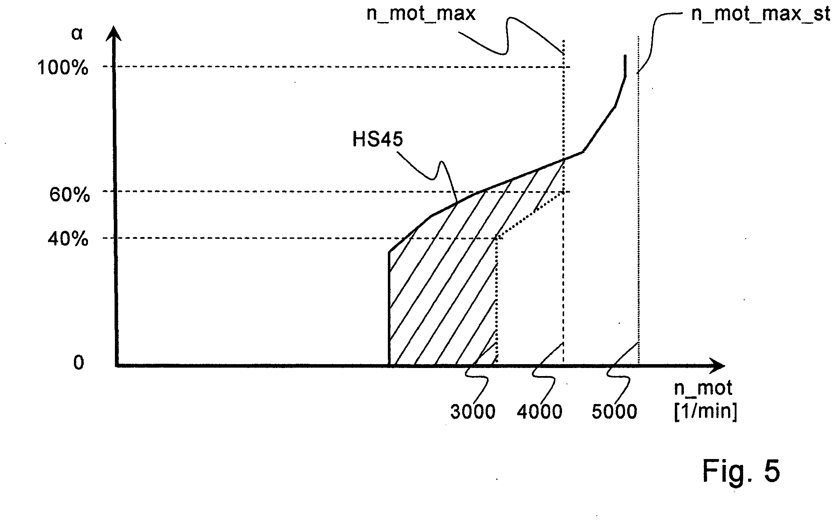

Fig. 4 zeigt die in Fig. 1 dargestellten Datenfelder DF1 und DF4 in einer erweiterten Ausführungsform für eine Hochschaltung HS ausgehend von der vierten Vorwärtsfahrstufe "4" in Richtung der fünften Vorwärtsfahrstufe "5", bei der die Drehzahlobergrenze n_mot_max des Betriebsbereichs des Fahrzeugs, innerhalb dem eine Schaltverhinderung durchgeführt wird, über einen Betätigungsbereich α des Fahrpedals in der in Fig. 5 dargestellten Art und Weise variiert.

Die lastabhängige Variation der Drehzahlobergrenze n_mot_max erfolgt dabei entweder durch mehrere im Datenfeld DF1 jeweils für ein Schaltprogramm hinterlegte, lastabhängige Kennwerte, die mit einer Standard-Drehzahlobergrenze n_mot_max_st, für die im Datenfeld DF4 für die vorgenannte Hochschaltung ein Wert von 5 000 1/min hinterlegt ist, multipliziert werden, oder mittels im Datenfeld DF4 hinterlegten lastabhängigen Drehzahlobergrenzen n_mot_max (α = 100 %) bis n_mot_max (α = 0 %), die jeweils mit einem lastunabhängigen Kennwert des Datenfeldes DF1 multipliziert werden.

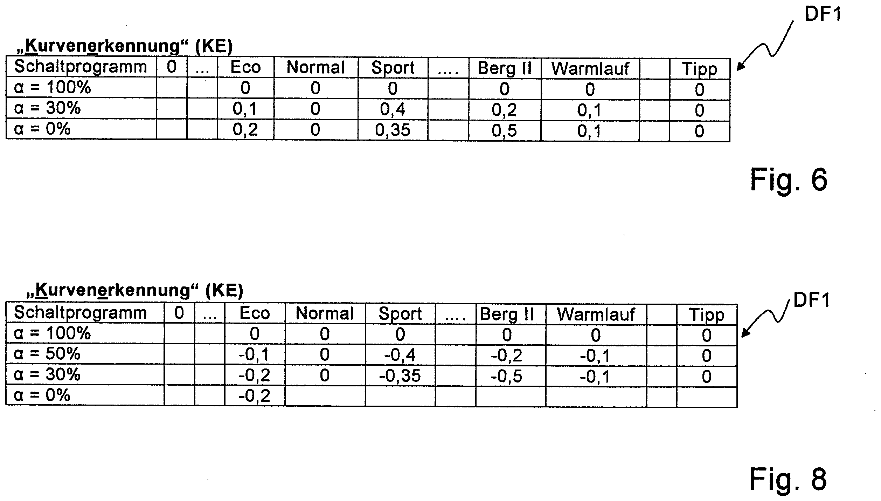

Fig. 6 zeigt das Datenfeld DF1 der Sonderfunktion "Kurvenerkennung KE", welches bei einer nicht beanspruchten Variante des erfindungsgemäßen Verfahrens Anwendung findet, bei dem eine durch eine aktivierte Sonderfunktion angeforderte Schaltverhinderung in Form einer relativen Schaltpunktverschiebung umgesetzt ist. Dabei wird jeweils eine zur Darstellung eines definierten Betriebszustandsverlaufes aktivierte Schaltkennlinie in der nachbeschriebenen Art und Weise verändert.

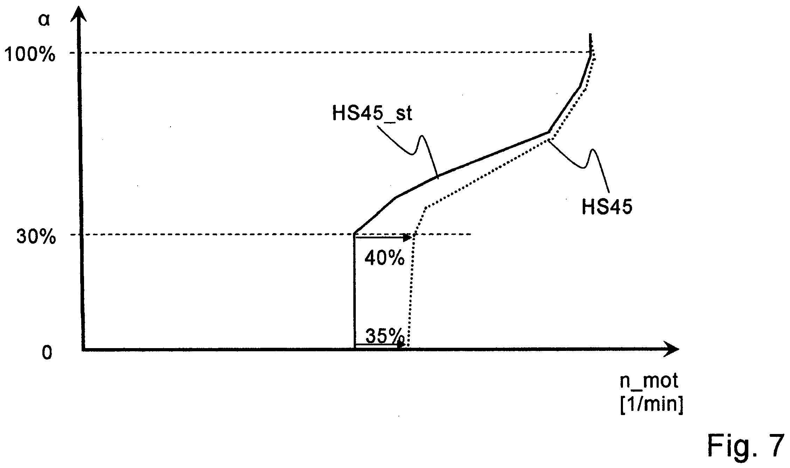

In dem Datenfeld DF1 sind jedem Schaltprogramm mehrere lastabhängige Kennwerte zugeordnet, mittels welchen die in Fig. 7 dargestellte Standard-Hochschaltkennlinie HS45_st des Sportfahrprogramms "Sport" in die Hochschaltkennlinie HS45 überführt wird.

Das bedeutet, dass bei der zweiten Variante des erfindungsgemäßen Verfahrens bei einer aktivierten Sonderfunktion für eine Hochschaltverhinderung im Gegensatz zu der Fig. 1 bis Fig. 5 zugrunde liegenden ersten Variante des erfindungsgemäßen Verfahrens zum Steuern eines Getriebes nicht ein einer Schaltkennlinie überlagerter Drehzahlbereich, innerhalb dem eine angeforderte Schaltung verhindert wird, in Abhängigkeit eines aktuellen Betriebszustandes des Fahrzeugs variiert wird. Vielmehr werden für eine bereichsweise Schaltverhinderung die Schaltpunkte des Getriebes über den Betätigungsbereich α des Fahrpedals in Abhängigkeit des jeweils aktuellen Betriebszustandes des Fahrzeuges verschoben, um verschiedenen Faktoren bzw. Einflüssen, wie einem aktuellen Fahrertyp, einer Steigung, einem Gefälle und dergleichen Rechnung tragen zu können und bei der aktuellen Ansteuerung des Getriebes berücksichtigen zu können.

Fig. 8 zeigt das Datenfeld DF1 der Sonderfunktion "Kurvenerkennung KE", welches für jedes Schaltprogramm mit mehreren lastabhängigen Kennwerten befüllt ist und bei der nicht beanspruchten Variante des erfindungsgemäßen Verfahrens bei Rückschaltungen im Getriebe berücksichtigt wird. Damit korrespondierend ist in Fig. 9 eine Standard-Rückschaltkennlinie RS43_st für eine Rückschaltung von der vierten in die dritte Vorwärtsfahrtstufe, mittels der bei nicht aktivierten Sonderfunktionen für eine Schaltverhinderung eine Schaltung angefordert wird, in Verbindung mit einer veränderten Schaltkennlinie RS43 gezeigt. Die in Fig. 9 dargestellte Veränderung der Standard-Rückschaltkennlinie RS43_st wird unter Berücksichtigung der dem vorliegend aktivierten Schaltprogramm "Eco" zugeordneten lastabhängigen Kennwerte durchgeführt. Das bedeutet, dass die Standard-Rückschaltkennlinie RS43_st bei einer Fahrpedalbetätigung von α = 0 % derart verändert wird, dass eine Rückschaltung bei einem Motordrehzahlwert erfolgt, der 20% unterhalb der Motordrehzahl liegt, die durch die Standard-Rückschaltkennlinie RS43_st festgelegt ist.

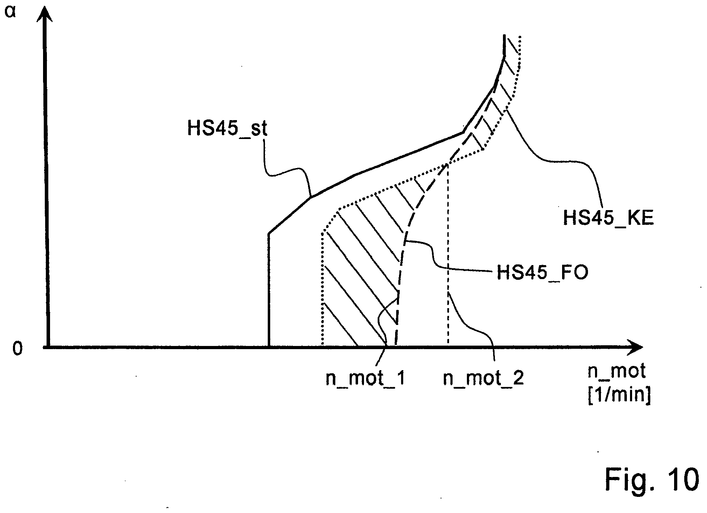

Fig. 10 zeigt die Standard-Hochschaltkennlinie HS45_st in Verbindung mit einer Kennlinienvariation bei aktiviertem Sportfahrprogramm "Sport". Zusätzlich sind die beiden Sonderfunktionen "Kurvenerkennung KE" und "Schnelle Fahrpedalrücknahme FO" gleichzeitig aktiviert, die eine Veränderung der Standard-Hochschaltkennlinie HS45_st in Richtung der Hochschaltkennlinien HS45_KE und HS45_FO bewirken. In diesem Fall wird in der gleichen Art und Weise wie bei dem erfindungsgemäßen Verfahren gemäß Fig. 1 bis Fig. 5, bei der bei mehreren gleichzeitig aktiven Sonderfunktionen eine mathematische Maximal- oder Minimalauswahl vorgenommen wird, vorgegangen.

Vorliegend bedeutet dies, dass von mehreren variierten Schaltkennlinien jeweils die Schaltkennlinie herangezogen wird, welche eine Hochschaltung zu dem jeweils größten Motordrehzahlwert oder eine Rückschaltung zu dem jeweils kleinsten Motordrehzahlwert anfordert. D. h., dass die Hochschaltung von der vierten in die fünfte Vorwärtsfahrstufe im Drehzahlbereich, der vom ersten Motordrehzahlwert n_mot_1 und dem zweiten Motordrehzahlwert n_mot_2 begrenzt ist, erst bei Überschreiben der über die Kennwerte der Sonderfunktion "Schnelle Fahrpedalrücknahme FO" angepassten Hochschaltkennlinie HS45_FO durchgeführt wird. Im weiteren Drehzahlbereich der Motordrehzahl, d. h. oberhalb des zweiten Motordrehzahlwertes n_mot_2 wird die Hochschaltung von der vierten in die fünfte Vorwärtsfahrstufe erst bei Überschreiten der durch die Kennwerte der Sonderfunktion "Kurvenerfassung KE" angepassten Hochschaltkennlinie HS45_KE durchgeführt.

Alternativ oder in Kombination zu der lastabhängigen Veränderung der Drehzahlobergrenze oder der Drehzahluntergrenze des Drehzahlbereiches, innerhalb dem eine Rückschaltverhinderung durchgeführt wird, oder der lastabhängigen Variation einer Schaltkennlinie ist es bei einer vorteilhaften Weiterbildung des Gegenstandes der Erfindung vorgesehen, dass auch ein ermittelter Fahrertyp dadurch berücksichtigt wird, dass der Drehzahlbereich und/ oder die Schaltkennlinie in Abhängigkeit des Fahrverhaltens eines Fahrers in der für eine Erhöhung des Fahrkomforts sowie einer Fahrsicherheit verbessernden Art und Weise angepasst werden.

### Bezugszeichen

- DF1, DF2, DF3, DF4: Datenfeld
- "0": Schaltprogramm
- "Eco": ökonomisches Schaltprogramm
- "Normal": Normalschaltprogramm
- "Sport": Sportfahrschaltprogramm
- "Berg II": Bergfahrschaltprogramm
- "Warmlauf": Warmlaufschaltprogramm
- "Tipp": Schaltprogramm für Tippmodus
- n_mot: Motordrehzahl
- n_mot_max: Drehzahlobergrenze
- n_mot_min: Drehzahluntergrenze
- n_mot_max_st: Standard-Drehzahlobergrenze
- "Kurvenerkennung KE": Sonderfunktion für Schaltverhinderung (KE)
- "Schnelle Fahrpedalrücknahme FO": Sonderfunktion für Schaltverhinderung (FO)
- "Spontane Verzögerung Fahrzeug SVF": Sonderfunktion für Schaltverhinderung (SVF)
- "Fahrgeschwindigkeitsregelung FGR": Sonderfunktion für Schaltverhinderung (FGR)
- "Fahrstabilitätsregelung ESP": Sonderfunktion für Schaltverhinderung (ESP)
- α: Betätigungsbereich des Fahrpedals
- HS45: Hochschaltkennlinie
- HS45_st: Standard-Hochschaltkennlinie
- RS45_st: Standard-Rückschaltkennlinie
- RS43: Rückschaltkennlinie
- RS: Rückschaltung
- HS: Hochschaltung

## Patentansprüche

1. Verfahren zur Steuerung eines Getriebes eines Fahrzeugs, insbesondere eines Automatgetriebes oder eines automatisierten Getriebes, bei dem eine Getriebeübersetzung ("1", "2", "3", "4", "5", "6") anhand vordefinierter Schaltprogramme ("0", "Eco", "Normal", "Sport", "Berg II", "Warmlauf", "Tipp") und damit korrespondierender Schaltkennlinien (HS45, RS43) betriebszustandsabhängig eingestellt wird und bei dem jeweils in Abhängigkeit eines aktuellen Betriebszustandes des Fahrzeugs jeweils wenigstens eine Sonderfunktion ("Kurvenerkennung KE", "Schnelle Fahrpedalrücknahme FO", "Spontane Verzögerung Fahrzeug SVF", "Fahrgeschwindigkeitsregelung FGR", "Fahrstabilitätsregelung ESP") aktiviert wird, die einen schaltprogrammseitig angeforderten Wechsel von einer Ist-Übersetzung des Getriebes zu einer Ziel-Übersetzung innerhalb eines vordefinierten Betriebsbereiches des Fahrzeuges verhindert,
wobei der Betriebsbereich des Fahrzeugs, innerhalb welchem ein Übersetzungswechsel des Getriebes verhindert wird, in Abhängigkeit applizierter betriebszustandsabhängiger Kennwerte variiert wird
und einen Drehzahlbereich einer Motordrehzahl (n_mot) einer Antriebsmaschine des Fahrzeugs mit einer Drehzahluntergrenze (n_mot_min) und einer Drehzahlobergrenze (n_mot_max) darstellt,
**dadurch gekennzeichnet, dass** der Betriebsbereich durch Multiplikation der Drehzahlobergrenze (n_mot_max) des Drehzahlbereichs der Motordrehzahl (n_mot) mit wenigstens einem der betriebszustandsabhängigen Kennwerte verändert wird.

2. Verfahren nach Anspruch 1, **dadurch gekennzeichnet, dass** der Betriebsbereich durch Multiplikation der Drehzahluntergrenze (n_mot_min) des Drehzahlbereichs der Motordrehzahl (n_mot) mit wenigstens einem der betriebszustandsabhängigen Kennwerte verändert wird.

3. Verfahren nach Anspruch 1 oder 2, **dadurch gekennzeichnet, dass** jeder Schaltkennlinie wenigstens ein Kennwert und wenigstens ein Drehzahlbereich, innerhalb dem eine Sonderfunktion ("Kurvenerkennung KE", "Schnelle Fahrpedalrücknahme FO", "Spontane Verzögerung Fahrzeug SVF", "Fahrgeschwindigkeitsregelung FGR", "Fahrstabilitätsregelung ESP") für eine Schaltverhinderung aktiv ist, zugeordnet sind.

4. Verfahren nach Anspruch 1, 2 oder 3, **dadurch gekennzeichnet, dass** die Drehzahlobergrenze (n_mot_max) und/oder die Drehzahluntergrenze (n_mot_min) über einen Betätigungsbereich (α) eines Fahrpedals konstant sind.

5. Verfahren nach einem der Ansprüche 1 bis 4, **dadurch gekennzeichnet, dass** die Drehzahlobergrenze (n_mot_max) und/oder die Drehzahluntergrenze (n_mot_min) für verschiedene Fahrertypen gleich sind.

6. Verfahren nach Anspruch 1, 2 oder 3, **dadurch gekennzeichnet, dass** die Drehzahlobergrenze (n_mot_max) und/oder die Drehzahluntergrenze (n_mot_min) über einen Betätigungsbereich (α) eines Fahrpedals variiert werden.

7. Verfahren nach einem der Ansprüche 1, 2, 3 und 6, **dadurch gekennzeichnet, dass** die Drehzahlobergrenze (n_mot_max) und/oder die Drehzahluntergrenze (n_mot_min) in Abhängigkeit eines Fahrverhaltens eines Fahrers variiert werden.

8. Verfahren nach einem der Ansprüche 1 bis 7, **dadurch gekennzeichnet, dass** bei einer angeforderten Hochschaltung (HS) und mehreren gleichzeitig aktivierten Sonderfunktionen ("Kurvenerkennung KE", "Schnelle Fahrpedalrücknahme FO", "Spontane Verzögerung Fahrzeug SVF") für eine Schaltverhinderung der Betriebsbereich mit der größten Drehzahlobergrenze (n_mot_max) ausgewählt wird.

9. Verfahren nach Anspruch 1, **dadurch gekennzeichnet, dass** bei einer angeforderten Rückschaltung (RS) und mehreren gleichzeitig aktivierten Sonderfunktionen ("Kurvenerkennung KE", "Fahrgeschwindigkeitsregelung FGR", "Fahrstabilitätsregelung ESP") für eine Schaltverhinderung der Betriebsbereich mit der kleinsten Drehzahluntergrenze (n_mot_min) ausgewählt wird.

## Claims

1. Method for controlling a transmission of a vehicle, in particular an automatic transmission or an automated transmission, in which a transmission ratio ("1", "2", "3", "4", "5", "6") is set as a function of the operating state on the basis of predefined shift programs ("0", "eco", "normal", "sport", "hill II", "warm-up", "tip") and shift characteristic curves (HS45, RS43) which correspond thereto, and in which in each case at least one special function ("cornering detection KE", "rapid return of accelerator pedal FO", "spontaneous deceleration of vehicle SVF", "cruise control FGR", "driving stability control ESP") is activated in each case as a function of a current operating state of the vehicle, which function prevents a changeover, requested on the shift program side, from an actual transmission ratio of the transmission to a target transmission ratio within a predefined operating range of the vehicle, wherein the operating range of the vehicle within which a changeover of the transmission ratio of the transmission is prevented is varied as a function of applied operating-state-dependent characteristic values,
and constitutes a rotational speed range of an engine rotational speed (n_mot) of a drive machine of the vehicle with a rotational speed lower limit (n_mot_min) and a rotational speed upper limit (n-mot-max),
**characterized in that** the operating range is changed by multiplying the rotational speed upper limit (n_mot_max) of the rotational speed range of the engine rotational speed (n_mot) by at least one of the operating-state-dependent characteristic values.

2. Method according to Claim 1, **characterized in that** the operating range is changed by multiplying the rotational speed lower limit (n_mot_min) of the rotational speed range of the engine rotational speed (n_mot) by at least one of the operating-state-dependent characteristic values.

3. Method according to Claim 1 or 2, **characterized in that** each shift characteristic curve is assigned at least one characteristic value and at least one rotational speed range within which a special function ("cornering detection KE", "rapid return of accelerator pedal FO", "spontaneous deceleration of vehicle SVF", "cruise control FGR", "driving stability control ESP") is active to prevent shifting.

4. Method according to Claim 1, 2 or 3, **characterized in that** the rotational speed upper limit (n_mot_max) and/or the rotational speed lower limit (n_mot_min) are/is constant over an activation range (α) of an accelerator pedal.

5. Method according to one of Claims 1 to 4,
**characterized in that** the rotational speed upper limit (n_mot_max) and/or the rotational speed lower limit (n_mot_min) are the same for various types of driver.

6. Method according to Claim 1, 2 or 3, **characterized in that** the rotational speed upper limit (n_mot_max) and/or the rotational speed lower limit (n_mot_min) are varied over an activation range (α) of an accelerator pedal.

7. Method according to one of Claims 1, 2, 3 and 6, **characterized in that** the rotational speed upper limit (n_mot_max) and/or the rotational speed lower limit (n_mot_min) are/is varied as a function of a driving behaviour of a driver.

8. Method according to one of Claims 1 to 7, **characterized in that** when an upshift (HS) is requested and there are a plurality of simultaneously activated special functions ("cornering detection KE", "rapid return of accelerator pedal FO", "spontaneous deceleration of vehicle SVF"), the operating range with the largest rotational speed upper limit (n_mot_max) is selected for the prevention of shifting.

9. Method according to Claim 1, **characterized in that** when a downshift (RS) is requested and there are a plurality of simultaneously activated special functions ("cornering detection KE", "cruise control FGR", "driving stability control ESP"), the operating range with the smallest rotational speed lower limit (n_mot_min) is selected for the prevention of shifting.

## Revendications

1. Procédé de commande d'une transmission d'un véhicule automobile, notamment d'une transmission automatique ou d'une transmission automatisée, dans lequel un rapport de transmission ("1", "2", "3", "4", "5", "6") est réglé en fonction de l'état de fonctionnement sur la base de programmes de changement de vitesse prédéfinis ("0", "Eco", "Normal", "Sport", "Montagne II", "Préchauffage", "Tipp") et par conséquent de caractéristiques de changement de vitesse correspondantes (HS45, RS43) et dans lequel au moins une fonction spéciale ("Reconnaissance de virage KE", "Retour rapide de la pédale d'accélérateur FO", "Décélération spontanée du véhicule SVF", "Régulation de la vitesse de conduite FGR", "Régulation de la stabilité de conduite ESP") est respectivement activée en fonction d'un état de fonctionnement actuel du véhicule, laquelle fonction spéciale inhibe un changement demandé côté programme de changement de vitesse d'un rapport réel de la transmission à un rapport cible dans un domaine de fonctionnement prédéfini du véhicule,
dans lequel le domaine de fonctionnement du véhicule à l'intérieur duquel un changement de rapport de la transmission est inhibé est amené à varier en fonction de valeurs caractéristiques appliquées qui dépendent de l'état de fonctionnement,
et représente un domaine de vitesse de rotation d'un moteur (n_mot) d'une machine d'entraînement du véhicule présentant une limite inférieure de vitesse de rotation (n_mot_min) et une limite supérieure de vitesse de rotation (n_mot_max),
**caractérisé en ce que** le domaine de fonctionnement est modifié par multiplication de la limite supérieure de vitesse de rotation (n_mot_max) du domaine de vitesse de rotation du moteur (n_mot) par au moins une valeur caractéristique dépendant de l'état de fonctionnement.

2. Procédé selon la revendication 1, **caractérisé en ce que** le domaine de fonctionnement est modifié par multiplication de la limite inférieure de vitesse de rotation (n_mot_min) du domaine de vitesse de rotation du moteur (n mot) par au moins l'une des valeurs caractéristiques dépendant de l'état de fonctionnement.

3. Procédé selon la revendication 1 ou 2,
**caractérisé en ce qu'**à chaque caractéristique de changement de vitesse sont associés au moins une valeur caractéristique et au moins un domaine de vitesse de rotation à l'intérieur duquel une fonction spéciale ("Reconnaissance de virage KE", "Retour rapide de la pédale d'accélérateur FO", "Décélération spontanée du véhicule SVF", "Régulation de la vitesse de conduite FGR", "Régulation de la stabilité de conduite ESP") est active pour une inhibition du changement de vitesse.

4. Procédé selon la revendication 1, 2 ou 3,
**caractérisé en ce que** la limite supérieure de vitesse de rotation (n_mot_max) et/ou la limite inférieure de vitesse de rotation (n_mot_min) est constante à l'intérieur d'un domaine d'actionnement (α) d'une pédale d'accélérateur.

5. Procédé selon l'une des revendications 1 à 4,
**caractérisé en ce que** la limite supérieure de vitesse de rotation (n_mot_max) et/ou la limite inférieure de vitesse de rotation (n_mot_min) sont les mêmes pour des types de conducteurs différents.

6. Procédé selon la revendication 1, 2 ou 3,
**caractérisé en ce que** la limite supérieure de vitesse de rotation (n_mot_max) et/ou la limite inférieure de vitesse de rotation (n_mot_min) sont amenées à varier à l'intérieur d'un domaine d'actionnement (α) d'une pédale d'accélérateur.

7. Procédé selon l'une des revendications 1, 2, 3 et 6, **caractérisé en ce que** la limite supérieure de vitesse de rotation (n_mot_max) et/ou la limite inférieure de vitesse de rotation (n_mot_min) sont amenées à varier en fonction d'un comportement de conduite d'un conducteur.

8. Procédé selon l'une des revendications 1 à 7,
**caractérisé en ce que**, lorsqu'un changement de rapport supérieur (HS) est demandé et lorsque plusieurs fonctions spéciales ("Reconnaissance de virage KE", "Retour rapide de la pédale d'accélérateur FO", "Décélération spontanée du véhicule SVF") sont activées simultanément, le domaine de fonctionnement présentant la limite supérieure de vitesse de rotation la plus élevée (n_mot_max) sélectionné pour une inhibition du changement de vitesse.

9. Procédé selon la revendication 1, **caractérisé en ce que**, lorsqu'un rétrogradage (RS) est demandé et lorsque plusieurs fonctions spéciales ("Reconnaissance de virage KE", "Régulation de la vitesse de conduite FGR", "Régulation de la stabilité de conduite ESP") sont activées simultanément, le domaine de fonctionnement présentant la limite inférieure de vitesse de rotation (n_mot_min) la plus faible est sélectionnée pour une inhibition du changement de vitesse.
